# EUROPÄISCHE PATENTSCHRIFT

(11) **EP 4 357 207 B1**
(45) Veröffentlichungstag und Bekanntmachung des Hinweises auf die Patenterteilung: **30.04.2025**
(21) Anmeldenummer: 23202002.4
(22) Anmeldetag: 06.10.2023
(51) Int. Cl.: B60T 8/172, B60T 13/66

(54) **EINSTELLVERFAHREN VON BETRIEBSBREMSFUNKTIONEN FÜR MOBILE ARBEITSMASCHINEN SOWIE EINE BREMSANORDNUNG**
METHOD FOR ADJUSTING SERVICE BRAKE FUNCTIONS FOR MOBILE WORKING MACHINES AND A BRAKE ARRANGEMENT
PROCÉDÉ DE RÉGLAGE DE FONCTIONS DE FREINAGE DE SERVICE POUR MACHINES DE TRAVAIL MOBILES ET SYSTÈME DE FREINAGE

(30) Priorität: 18.10.2022 DE 102022210986
(43) Veröffentlichungstag der Anmeldung: 24.04.2024
(73) Patentinhaber: Robert Bosch GmbH, 70442 Stuttgart (DE)
(72) Erfinder: Mayer, Jochen, 89537 Giengen An Der Brenz (DE); Glasbrenner, Patrick, 88448 Attenweiler (DE)

(56) Entgegenhaltungen:
- WO-A1-96/11826
- DE-A1- 102021 109 670
- DE-A1- 19 648 559
- DE-A1- 19 835 937

## Beschreibung

### Technisches Gebiet

Die vorliegende Erfindung betrifft ein Einstellverfahren von Betriebsbremsfunktionen für mobile Arbeitsmaschinen, insbesondere Agrarmaschinen und Baumaschinen, nach dem Oberbegriff des Anspruchs 1, und eine Bremsanordnung für solch mobile Arbeitsmaschinen nach dem Oberbegriff des Anspruchs 8.

Mobile Arbeitsmaschinen kommen in unterschiedlichen Gebieten zum Einsatz, welche jeweils eine unterschiedliche Beschaffenheit des Untergrundes besitzen. Insbesondere der Einsatz am Hang oder Hügel kann für solche schweren Arbeitsmaschinen ein Problem darstellen. Deshalb besitzen mobile Arbeitsmaschinen in der Regel eine elektrisch aktivierbare Feststellbremse, welche beispielsweise zum Halten am Hang verwendet wird. Diese ist jedoch oft ungenügend dosierbar und wenig robust, um eine Hang- Halte- oder sogar Notbremsfunktionen auszuführen.

Die DE198 35 937 A1 und die DE 196 48 559 A1, die als nächstliegend für den Gegenstand des Anspruchs 7 angesehen wird, offenbaren jeweils den Gegenstand des Oberbegriffs des Anspruchs 1. Weiterer relevanter Stand der Technik findet sich in der WO96/11 826 A1 oder der DE 10 2021 109 670 A1.

Die Aufgabe der vorliegenden Erfindung besteht daher darin ein Einstellverfahren zur Verfügung zu stellen, welches eine automatische Betätigung einer Betriebsbremsfunktion ermöglicht sowie eine einfachere Handhabung dadurch bereitstellt.

Gelöst wird die Aufgabe durch ein Einstellverfahren von Betriebsbremsfunktionen für mobile Arbeitsmaschinen gemäß Anspruch 1 sowie eine Bremsanordnung gemäß Anspruch 7.

Das erfindungsgemäße Einstellverfahren von Betriebsbremsfunktionen für mobile Arbeitsmaschinen beginnt mit dem Erfassen von mindestens einem externen Signal über mindestens einen Sensor und dem Weiterleiten an eine Steuereinheit. In der Steuereinheit wird das mindestens eine erfasste externe Signal so verarbeitet, indem es beispielsweise gefiltert, fusioniert oder umgewandelt wird, dass ein Sollbremsdruck ermittelt und daraus ein elektrischer Ventilstrom berechnet wird. Der berechnete Ventilstrom dient zur Steuerung eines Steuerventils eines Bremsbetätigungspedals und wird daher in einem weiteren Schritt an das Steuerventil weitergeleitet. Das Steuerventil des Bremsbetätigungspedals stellt daraufhin einen Bremsdruck in einem hydraulischen Bremskreislauf ein, sodass mindestens ein vorausgewählter Bremsfunktionsmodus, der über eine Mensch-Maschinen-Schnittstelle aktiviert wurde, ausgeführt wird. Erfindungsgemäß erfolgt das Einstellen eines Bremsdrucks aus einem vorgewählten Betriebsfunktionsmodus dabei automatisch. Erfindungsgemäß wird das externe Signal aus einer kontinuierlichen Umfeld-Überwachung der mobilen Arbeitsmaschine ermittelt.

Es können auch zwei Bremskreisläufe mit dem erfindungsgemäßen Verfahren gesteuert werden. Dann werden zwei Sollbremsdrücke und zwei Ventilströme berechnet, mit denen zwei Steuerventile eingestellt werden.

Bevorzugt kann die Steuereinheit über eine drahtgebundene oder drahtlose Verbindung mit dem Fahrzeuggeschwindigkeitssensor kommunizieren, damit Messsignale vom Fahrzeuggeschwindigkeitssensor an die Steuereinheit übertragen werden können.

Weiterhin bevorzugt kann die Steuereinheit so konfiguriert sein, dass es die externen Signale in Form von externen Fahrzeugdaten wie Fahrzeugneigung, Fahrpedalposition, Antriebsmoment und oder Neigung des Arbeitsfahrzeugs mithilfe des mindestens einen Sensors überwacht.

Bevorzugt erfolgt die Berechnung des notwendigen Ventilstroms zum Ansteuern des Steuerventils mit Hilfe von Kennfeldern, Nachschlagetabellen, einer geeigneten mathematischen Formel und/oder Algorithmen, die die Messsignale des Arbeitsfahrzeugs mit den in Beziehung setzen. Wenn der überwachte Messwert, wie beispielsweise die Neigung des Fahrzeugs sowie das Antriebsmoment, einen Schwellenwert überschreitet, kann die Steuereinheit so konfiguriert werden, dass es feststellt, dass das Arbeitsfahrzeug an einem Hang befindlich ist. Um festzustellen, ob das Arbeitsfahrzeug tatsächlich einen Halt am Hang vollzieht, kann ergänzend ein Schwellwert für eine Zeitdauer einbezogen werden.

Bevorzugt können mehrere Bremsfunktionsmodi, welche vorher in der Steuereinheit festgelegt wurde, gleichzeitig aktiviert sein.

Besonders bevorzugt, können die jeweiligen Bremsfunktionsmodi adaptiert werden. Beispielsweise kann der Bremsdruck stärker eingestellt werden, sodass bei einer höheren Steigung ein Herabrollen des schweren Fahrzeugs verhindert wird.

Bevorzugt kann ein Hill-Hold-Modus, also eine Berganfahr-Hilfe, oder ein Down-Hill-Braking-Modus, also ein unterstütztes Abbremsen beim Herunterfahren oder Halten am Berg, eingestellt werden. Sowohl der Hill-Hold-Modus als auch der Down-Hill-Braking-Modus verhindert das ungewollte Wegrollen des Fahrzeugs im Stillstand oder beim Anfahren an einer geneigten Fahrbahn. Sobald die Arbeitsmaschine bis zum Stillstand abgebremst wird, erfasst der mindestens eine Sensor, dass sowohl keine Raddrehzahl als auch ein Neigungswinkel vorliegt. Sobald diese Signale gleichzeitig vorliegen, wird der in dem Moment des Stillstands anfallende Bremsdruck gespeichert und aufrechterhalten. Betätigt der Fahrer im Anschluss das Bremsbetätigungspedal, so wird bei einem Überschreiten des Schwellenwerts, welcher beispielsweise das Drehmoment des Motors sein kann, der Bremsdruck im Bremskreislauf zunächst für beispielsweise 3 bis 6 Sekunden aufrechterhalten. Somit wird ein Rückwärts-Herabrollen des Arbeitsfahrzeuges verhindert. Nach Ablauf der beispielsweise 5 Sekunden, erfolgt eine Minderung des Bremsdrucks im Bremskreislauf, sodass sich die Bremsen an den Rädern lösen und sich das Fahrzeug wieder in Bewegung setzen kann. Diese Vorgehensweise erfolgt auch im Down-Hill-Braking-Modus, also beim Herabfahren eines Hügels.

Ferner wird eine erfindungsgemäße Bremsanordnung offenbart, welche für mobile Arbeitsmaschinen, insbesondere Agrarmaschinen/Traktoren und Baumaschinen gedacht und ausgelegt ist. Die Bremsanordnung umfasst dabei ein hydraulisches Bremsbetätigungspedal mit einem daran angeordneten Steuerventil zum Einstellen eines Bremsdrucks. Ferner umfasst die Bremsanordnung einen hydraulischen Kreislauf, welcher sich in einen ersten hydraulischen Kreislauf und einen zweiten hydraulischen Kreislauf aufteilt. Der erste hydraulische Kreislauf treibt die Kette oder das Rad oder die Räder der linken Seite der Arbeitsmaschine und der zweite hydraulische Kreislauf treibt die Kette oder das Rad oder die Räder der rechten Seite der Arbeitsmaschine an. Weiterhin ist der erste hydraulische Kreislauf mit einem ersten Betätigungsabschnitt des Bremsbetätigungspedals verbunden, wobei der zweite hydraulische Kreislauf mit einem zweiten Betätigungsabschnitt des Bremsbetätigungspedals verbunden ist. An dem Steuerventil ist eine elektronische Steuereinheit angeordnet, um einen berechneten Ventilstrom an das hydraulische Bremsbetätigungspedal übertragen zu können. Weiterhin umfasst die Bremsanordnung eine Mensch-Maschinen-Schnittstelle, welche an die elektronische Steuereinheit gekoppelt ist und manuell vom Fahrer bedient werden kann. Weiterhin umfasst die Bremsanordnung mindestens einen Sensor, der dazu ausgelegt ist, mindestens ein externes Signal der Arbeitsmaschine zu erfassen

Erfindungsgemäß ist die Bremsanordnung dazu ausgelegt das vorher beschriebene Einstellverfahren von Betriebsbremsfunktionen auszuführen.

Bevorzugt ist die Mensch-Maschinen-Schnittstelle als externes Bedienelement ausgebildet, welches die Form eines Displays, eines Schalters, eines Knopfes oder eines Joysticks haben kann. Alternative Ausgestaltungen zum manuellen Betätigen könnten ebenfalls umgesetzt werden.

Bei einer Weiterbildung weist die mobile Arbeitsmaschine einen elektrischen Antrieb auf. Da im Gegensatz zu hydrostatisch angetriebenen mobilen Arbeitsmaschinen nicht über ein Prinzip bedingtes Haltemoment, also ein eingeschlossenes hydraulisches Volumen, welches nur zeitverzögert durch eine Leckage abgebaut wird (hydraulische Ansteuerung), sondern eine elektrohydraulische Ansteuerung gebremst werden kann, ist eine Ausführung von unterschiedlichen Bremsbetriebsfunktionen wie beispielsweise den Hill-Hold-Modus besonders vorteilhaft.

Bevorzugt hat das hydraulische Bremsbetätigungspedal eine erste und eine zweite Unterbaugruppe, die so konfiguriert sind, dass sie in einer vormontierten Weise aneinander montiert werden können. Die erste Unterbaugruppe umfasst den ersten Steuerkolben und einen ersten Betätigungskolben, die jeweils entlang einer ersten Achse bewegbar sind, wobei mindestens eine erste Feder zwischen dem ersten Steuerkolben und dem ersten Betätigungskolben entlang der ersten Achse angeordnet ist. Die erste Unterbaugruppe umfasst weiterhin den zweiten Steuerkolben und einen zweiten Betätigungskolben die jeweils entlang einer zweiten Achse bewegbar sind, wobei mindestens eine zweite Feder zwischen der zweiten Spule und dem zweiten Betätigungskolben entlang der zweiten Achse angeordnet ist und die erste und die zweite Achse parallel zueinander sind. Die zweite Unterbaugruppe umfasst einen dritten und einen vierten Betätigungskolben. Der dritte Betätigungskolben ist entlang der ersten Achse beweglich, wobei er eine dritte Kontaktfläche aufweist, die in der Lage ist, eine erste Kontaktfläche des ersten Betätigungskolbens zu kontaktieren. Der vierte Betätigungskolben ist entlang der zweiten Achse beweglich und weist eine vierte Kontaktfläche auf, die in der Lage ist, eine zweite Kontaktfläche des zweiten Betätigungskolbens zu kontaktieren.

Vorzugsweise werden die erste und die zweite Baugruppe vor dem Zusammenbau vollständig vormontiert. Vorzugsweise ist mindestens ein Betätigungsmittel vorhanden, welche auf den dritten und/oder den vierten Betätigungskolben wirkt, um die Bremse zu betätigen. Vorzugsweise werden der erste und der zweite Betätigungskolben nur über den dritten bzw. den vierten Betätigungskolben betätigt. Weiterhin ist die erste bis vierte Kontaktfläche flach und senkrecht zur ersten bzw. zweiten Achse ausgerichtet. Vorzugsweise ist ein Außendurchmesser des ersten Betätigungskolbens an der ersten Kontaktfläche größer als ein Außendurchmesser des ersten Steuerkolbens. Vorzugsweise ist ein Außendurchmesser des zweiten Betätigungskolbens größer als ein Außendurchmesser des zweiten Steuerkolbens. Vorzugsweise sind der erste und/oder der zweite Steuerkolben Teil eines Druckminderventils.

Es kann vorgesehen sein, dass die zweite Unterbaugruppe einen zweiten Körper aufweist, der den dritten und den vierten Betätigungskolben aufnimmt, wobei der zweite Körper an einem ersten Körper der ersten Unterbaugruppe befestigt ist und wobei der erste Körper die erste und die zweite Spule, den ersten und den zweiten Betätigungskolben und die mindestens eine erste Feder und die mindestens eine zweite Feder aufnimmt. Der Durchmesser des dritten Betätigungskolbens an der dritten Kontaktfläche ist kleiner als ein Durchmesser des ersten Betätigungskolbens an der ersten Kontaktfläche. Der zweite Körper begrenzt eine Bewegung des ersten Betätigungskolbens entlang der ersten Achse und/oder ein Durchmesser des vierten Betätigungskolbens an der vierten Kontaktfläche ist kleiner als ein Durchmesser des zweiten Betätigungskolbens an der zweiten Kontaktfläche, wobei der zweite Körper eine Bewegung des zweiten Betätigungskolbens entlang der zweiten Achse begrenzt. Bei dieser Ausführungsform kann der Durchmesser des ersten und des vierten Betätigungskolbens flexibel an die gewählte Betätigungsart angepasst werden. Der erste und der zweite Betätigungskolben sind für alle Betätigungsarten identisch.

Vorzugsweise stößt der erste und der zweite Körper auf einer ebenen Fläche aneinander, die senkrecht zur ersten und zweiten Achse steht. Vorzugsweise begrenzen der erste und der zweite Körper sowie der erste und der zweite Schieber eine Auslasskammer, die mit einem Auslassanschluss des ersten Körpers fluidisch verbunden ist. Der Druck in der Auslasskammer wirkt vorzugsweise von allen Seiten auf den ersten und den zweiten Druck in der Entlüftungskammer vorzugsweise von allen Seiten gleichmäßig auf den ersten und den zweiten Betätigungskolben, so dass er keine Nettokraft auf den ersten bzw. zweiten Betätigungskolben erzeugt. bzw. zweiten Betätigungskolben erzeugt.

Es kann vorgesehen sein, dass der dritte Betätigungskolben zusammen mit dem zweiten Körper eine erste Kammer begrenzt, wobei sich das Volumen der ersten Kammer vergrößert, wenn der dritte Betätigungskolben in Richtung des ersten Steuerkolbens bewegt wird und/oder wobei der vierte Betätigungskolben zusammen mit dem zweiten Körper eine zweite Kammer begrenzt, wobei sich das Volumen der zweiten Kammer vergrößert, wenn der vierte Betätigungskolben in Richtung des zweiten Steuerkolbens bewegt wird. Die zweite Baugruppe umfasst mindestens ein Steuerventil, das mit der ersten und/oder der zweiten Kammer fluidisch verbunden ist. Bei dieser Ausführungsform ist eine elektromechanische Betätigung der Bremsen vorgesehen. Es ist zu beachten, dass der entsprechende Steuerdruck nicht direkt auf den ersten oder zweiten Steuerkolben wirkt. Stattdessen erfolgt die entsprechende Wirkung über die mindestens eine erste oder zweite Feder. Dies ermöglicht eine bessere Feinsteuerung der Bremskraft und vermeidet Schwingungen der Bremskraft. Vorzugsweise ist das mindestens eine Steuerventil ein Druckminderventil, dessen Ausgangsdruck mit der ersten und/oder zweiten Kammer verbunden ist. Vorzugsweise wird ein Einstelldruck des Steuerventils elektrisch eingestellt. Ist ein Steuerventil vorhanden, so ist dieses Steuerventil vorzugsweise strömungstechnisch parallel mit der ersten und der zweiten Kammer verbunden, so dass die erste und die zweite Kammer den gleichen Druck aufweisen. Wenn zwei Steuerventile vorhanden sind, sind die erste und die zweite Kammer vorzugsweise mit jeweils einem separaten Steuerventil strömungstechnisch verbunden. Mit dieser Ausführungsform ist es möglich, elektromechanisch betätigte hydraulische Bremsbetätigungspedale zu haben, wobei eine mechanische Möglichkeit zur direkten Betätigung der Schieber vorhanden sein kann oder nicht.

Es kann vorgesehen sein, dass der erste und der zweite Steuerkolben jeweils eine separate Druckquelle aufweisen, wobei das mindestens eine Steuerventil mit der genannten mindestens einen Druckquelle zur Druckversorgung verbunden ist. Vorzugsweise ist ein Wechselventil vorhanden, wobei die Druckquellen mit einer Eingangsseite des Wechselventils verbunden sind, wobei eine Ausgangsseite des Wechselventils mit dem mindestens einen Steuerventil verbunden ist. Vorzugsweise ist das Wechselventil in der zweiten Unterbaugruppe angeordnet. Jede Druckquelle umfasst einen Hydraulikspeicher. Wenn zwei Steuerventile vorhanden sind, kann jedes Steuerventil kann an eine separate Druckquelle angeschlossen werden.

Es kann vorgesehen sein, dass das hydraulische Bremsbetätigungspedal ein bewegliches Betätigungselement umfasst, das so konfiguriert ist, dass es den ersten und den zweiten Steuerkolben parallel betätigt, wobei es eine dritte Unterbaugruppe gibt, die so konfiguriert ist, dass sie an der zweiten Unterbaugruppe vormontiert montiert wird, wobei die dritte Unterbaugruppe das Betätigungselement umfasst. Das Betätigungselement ist so konfiguriert, dass es den dritten und den vierten Betätigungskolben parallel berührt. Bei dieser Ausführungsform ist eine rein mechanische Betätigung der Bremsen vorgesehen. Vorzugsweise handelt es sich bei dem Betätigungselement um ein Pedal, das durch einen menschlichen Fuß betätigt werden kann. Es ist auch möglich, ein Betätigungselement zu verwenden, das für die Betätigung durch eine menschliche Hand ausgelegt ist. Der genannte Kontakt zwischen dem Betätigungselement und dem dritten und/oder vierten Betätigungskolben kann aufgehoben werden, wenn das Betätigungselement nicht betätigt wird.

Es kann vorgesehen sein, dass die dritte Baugruppe einen dritten Körper aufweist, der an dem zweiten Körper befestigt ist, wobei das Betätigungselement an dem dritten Körper beweglich gelagert ist, wobei an dem übrigen Betätigungselement eine Wippe bezüglich einer dritten Achse schwenkbar gelagert ist und die Wippe ein erstes und ein zweites freies Ende aufweist, die sich auf gegenüberliegenden Seiten der dritten Achse befinden, wobei das erste freie Ende den ersten Betätigungsabschnitt kontaktieren kann und das zweite freie Ende den zweiten Betätigungsabschnitt kontaktieren kann. Bei dieser Ausführungsform kann die Kraft des Betätigungselements gleichmäßig auf die erste und die zweite Spule verteilt werden. Wenn eine der Spulen aufgrund eines Fehlers blockiert, bleibt die andere Spule funktionsfähig. Vorzugsweise stoßen der zweite und der dritte Körper auf einer ebenen Fläche aneinander, die senkrecht zur ersten und zweiten Achse steht.

Es kann vorgesehen sein, dass das Betätigungselement ein Pedal ist, das in Bezug auf eine vierte Achse schwenkbar an dem dritten Körper angebracht ist, wobei die vierte Achse senkrecht zu der ersten und der zweiten Achse steht und der Abstand von der vierten zur ersten Achse und von der vierten zur zweiten Achse gleich ist. Vorzugsweise ist ein Sensor vorhanden, der dazu ausgebildet ist, den Schwenkwinkel des Pedals in Bezug auf die vierte Achse zu messen. Vorzugsweise macht sich der Sensor den Hall-Effekt zunutze. Vorzugsweise steht die dritte Achse senkrecht zur vierten Achse, wobei sie zwischen der ersten und der zweiten Achse angeordnet ist.

### Kurzbeschreibung der Figuren

Fig. 1 zeigt eine Darstellung zur Veranschaulichung eines erfindungsgemäßen Einstellverfahren von Betriebsbremsfunktionen für mobile Arbeitsmaschinen im Zusammenspiel mit einer erfindungsgemäßen Bremsanordnung.
Fig. 2 zeigt eine Schnittdarstellung eines Ausführungsbeispiels eines hydraulischen Bremsbetätigungspedals gemäß einer ersten Ausführungsform der Erfindung.

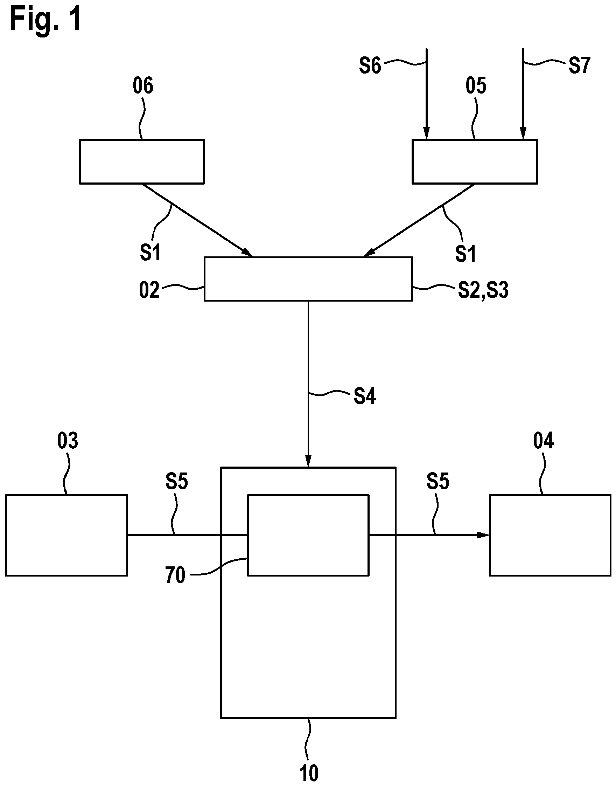

In einem ersten Schritt S1 werden gemäß Fig. 1 von mindestens einem Sensor 06 und/oder einer Mensch-Maschinen-Schnittstelle 05, welche mit einer Steuereinheit 02 verbunden sind/ist, externe Signale erfasst und an die Steuereinheit 02 weitergeleitet. Der mindestens eine Sensor 06 kann dabei Fahrzeugdaten wie Fahrgeschwindigkeit, Neigung des Fahrzeugs, Antriebsmoment und dergleichen erfassen. Die Mensch-Maschinen-Schnittstelle 05 kann als Display, Knopf, Schalter oder Joystick ausgebildet und innerhalb des mobilen Arbeitsfahrzeugs angeordnet sein.

Das kontinuierliche Erfassen des mindestens einen externen Signals kann dabei automatisch erfolgen. Die manuelle Auswahl S6 eines Bremsfunktionsmodus erfolgt über die Mensch-Maschinen-Schnittstelle 05. Weiterhin kann der Fahrer über die Mensch-Maschinen-Schnittstelle 05 eine Adaption S7 der Bremsfunktionsmodi tätigen.

In dem darauffolgenden Schritt kommt es durch beispielsweise Prozessoren in der Steuereinheit 02, die nicht gezeigt sind, zu einer Verarbeitung der externen Signale und das Ermitteln eines Sollbremsdrucks S2. Die Verarbeitung der externen Signale können eine Filterung, Zusammenführung oder Glättung der Signale sein. Anhand des Sollbremsdrucks wird in einem dritten Schritt ein Ventildruckstrom berechnet S3, der daraufhin an ein Steuerventil 70 weitergeleitet S4 wird, welches mit der Steuereinheit 02 verbunden ist, wobei das Steuerventil 70 an einem Bremsbetätigungspedal 10 angeordnet ist und dazu ausgelegt ist, einen Bremsdruck einzustellen.

In einem letzten Schritt empfängt das Steuerventil 70 den von der Steuereinheit 02 ermittelten elektrischen Ventilstrom und stellt einen Bremsdruck in einem der zwei Bremskreisläufe 03, 04 ein, welche an dem Steuerventil 70 angeordnet sind. Durch die von dem mindestens einen Sensor 06 erfassten Fahrzeugdaten, wie Neigungswinkel, Antriebsmoment etc. kann ermittelt werden, in welcher Position sich das Fahrzeug befindet und ob die vorher bestimmten Schwellwerte überschritten wurden, sodass das Steuerventil 70 über die Steuereinheit 02 und das Bremsbetätigungspedal 10 den Bremskreislauf 03, 04 abbremst und/oder blockiert, sodass durch den gewünschten Bremsfunktionsmodus und dessen Adaption ein geeigneter Bremsdruck eingestellt wird.

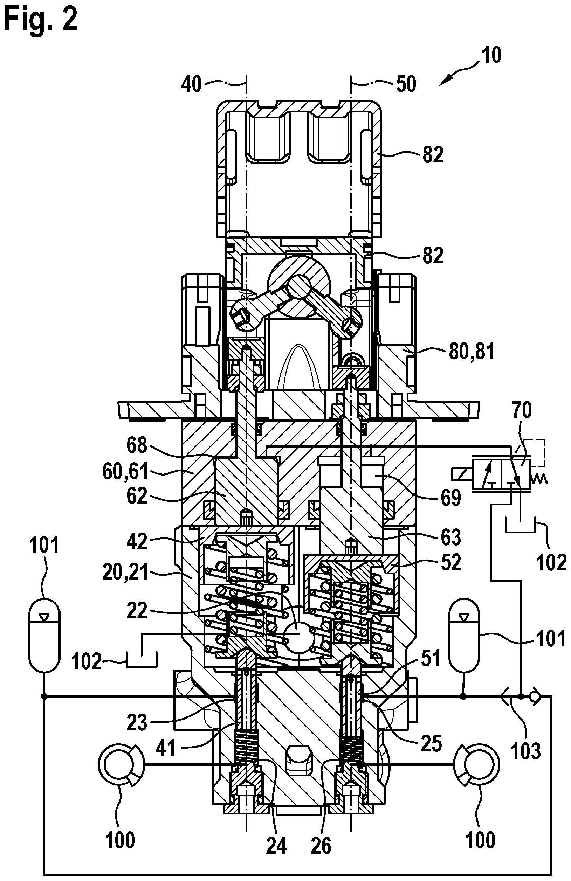

Sobald die Steuereinheit 02 erkennt, dass der Schwellwert der jeweiligen Fahrzeugdaten wieder unterschritten wurde, wird ein Signal über das Steuerventil 70 an das hydraulische Bremsbetätigungspedal 10 geleitet und der blockierte hydraulische Kreislauf 03, 04 wieder freigegeben. Die mechanische Umsetzung des Bremsverfahrens anhand des Bremsbetätigungspedals 10 ist in der Fig. 2 gezeigt und in den folgenden Abschnitten beschrieben.

Fig. 2 zeigt eine Schnittdarstellung eines hydraulischen Bremsbetätigungspedals 10 gemäß einer ersten Ausführungsform der Erfindung. Das hydraulische Bremsbetätigungspedal 10 umfasst eine erste, eine zweite und eine dritte Unterbaugruppe 20; 60; 80. Jede Unterbaugruppe 20; 60; 80 kann komplett vormontiert werden. Anschließend wird das gesamte hydraulische Bremsbetätigungspedal 10 aus den genannten drei Baugruppen 20; 60; 80 zusammengesetzt. Die genannten Baugruppen 20; 60; 80 sind vorzugsweise über Schrauben miteinander verbunden. Insbesondere die dritte Baugruppe 60 existiert in verschiedenen Varianten, wobei Fig. 2 eine der anspruchsvolleren Varianten der zweiten Baugruppe 60 zeigt, die eine rein manuelle Bedienung der Bremsen 100 und eine elektrohydraulische Bedienung über das erste Steuerventil 70 ermöglicht. Um verschiedene Betriebsvarianten zu erreichen, muss vor allem die zweite Baugruppe 60 modifiziert werden. Die erste und die dritte Unterbaugruppe 20; 80 können unverändert belassen werden. Daher können die erste und die dritte Baugruppe in hoher Stückzahl und zu geringen Kosten hergestellt werden.

Die erste Unterbaugruppe 20 hat einen ersten und zweiten Bremsdruckanschluss 24; 26, der jeweils mit einer entsprechenden Bremse 100 verbunden ist. Die Bremse 100 kann eine Scheibenbremse oder eine Trommelbremse sein. An jeden Bremsdruckanschluss 24; 26 können mehrere Bremsen parallel angeschlossen werden. Beide Bremsen 100 werden von einem Betätigungselement 82 parallel betätigt, um zwei unabhängige Bremskreise zu haben und die Sicherheit zu erhöhen. Bei dieser Ausführungsform der Erfindung besteht eine rein mechanische Kopplung zwischen dem Betätigungselement 82 und dem ersten und dem zweiten Steuerkolben 41; 51, wenn die dritte Baugruppe 80 vorhanden ist. So kann auch bei Ausfall der elektrohydraulischen Betätigung die Bremsanlage sicher betrieben werden. Das Betätigungselement 82 ist Teil der dritten Unterbaugruppe 80.

Weiterhin weist die erste Baugruppe 20 einen ersten und einen zweiten Versorgungsanschluss 23; 25 auf. Diese sind typischerweise mit jeweils einer von zwei unabhängigen Druckquellen 101 verbunden, um die Sicherheit zu erhöhen. Die Druckquellen 101 umfassen vorzugsweise jeweils einen Hydraulikspeicher. Vorzugsweise ist ein System zum Füllen der Speicher vorgesehen, welches in Fig. 1 nicht dargestellt ist.

Die erste Unterbaugruppe 20 hat einen Entlüftungsanschluss 22, der mit einem Tank 102 verbunden ist. Das hydraulische Bremsbetätigungspedal 10 wird vorzugsweise mit Hydrauliköl und nicht mit der in Kraftfahrzeugen verwendeten DOT-Bremsflüssigkeit betrieben. Das hydraulische Bremsbetätigungspedal 10 wird vorzugsweise in Fahrzeugen eingesetzt, die über hydraulische Arbeitsfunktionen und/oder einen hydraulischen Fahrantrieb verfügen, wobei alle hydraulischen Funktionen einschließlich der Bremse eine gemeinsame Pumpe zur Hydraulikdruckversorgung nutzen.

Der erste und der zweite Schieber 41; 51 sind entlang einer ersten bzw. einer zweiten Achse 40; 50 beweglich, wobei die erste und die zweite Achse 40; 50 eine Mittelachse des entsprechenden ersten oder zweiten Schiebers 41; 51 ist. Die erste und die zweite Achse 40; 50 sind parallel zueinander. Die erste Unterbaugruppe 20 hat einen ersten Körper 21, der an einem zweiten Körper 61 der zweiten Unterbaugruppe 60 mit einer flachen Oberfläche anliegt, die senkrecht zu der ersten und der zweiten Achse 40; 50 ist. Der zweite Körper 61 begrenzt die Bewegung des ersten bzw. des zweiten Betätigungskolbens 42; 52 mit der genannten ebenen Fläche. Die dritte Unterbaugruppe 80 hat einen dritten Körper 81, der mit einer ebenen Fläche, die senkrecht zur ersten und zweiten Achse 40; 50 steht, am zweiten Körper 61 anliegt.

Fig. 1 zeigt das erste Steuerventil 70 in symbolischer Weise, wobei das erste Steuerventil 70 beim gezeigten Ausführungsbeispiel Teil der zweiten Unterbaugruppe 20 ist. Das erste Steuerventil 70 ist als Druckreduzierventil ausgebildet, das elektrisch betrieben wird, d.h. der Ausgangsdruck des ersten Steuerventils 70 ist proportional oder umgekehrt proportional zum Strom, der das erste Steuerventil 70 steuert. Die Speicher der beiden unabhängigen Druckquellen 101 sind vorzugsweise jeweils mit einer Eingangsseite des Wechselventils 103 verbunden, wobei die entsprechende Ausgangsseite mit einem Versorgungsanschluss des ersten Steuerventils 70 verbunden ist. Der Abluftanschluss des ersten Steuerventils 70 ist mit dem Tank 102 verbunden.

Bei der ersten Ausführungsform gemäß Fig. 1 sind die erste und die zweite Kammer 68; 69 der zweiten Unterbaugruppe 60 parallel an das erste Steuerventil 70 angeschlossen, so dass beide Kammern 68; 69 denselben Druck aufweisen. Es ist möglich, für die erste und die zweite Kammer 68 bzw. 69 jeweils ein separates Steuerventil vorzusehen.

### Bezugszeichenliste

02 Steuereinheit
03 erster hydraulischer Bremskreislauf
04 zweiter hydraulischer Bremskreislauf
05 Mensch-Maschinen-Schnittstelle
06 Lenkwinkelsensor
10 hydraulisches Bremsbetätigungspedal
20 erste Unterbaugruppe
21 erster Körper
22 Abgasanschluss
23 erster Vorratsanschluss
24 erster Bremsdruckanschluss
25 zweiter Vorratsanschluss
26 Zweiter Anschluss für den Bremsdruck
40 erste Achse
41 erster Steuerkolben
42 erster Betätigungskolben
50 zweite Achse
51 zweiter Steuerkolben
52 zweiter Betätigungskolben
60 zweite Unterbaugruppe
61 zweiter Körper
62 dritter Betätigungskolben
68 erste Kammer
69 zweite Kammer
70 erstes Steuerventil
80 dritte Unterbaugruppe
81 drittes Gehäuse
82 Betätigungselement
100 Bremse
101 Druckquelle
102 Behälter / Tank
103 Wechselventil

## Patentansprüche

1. Einstellverfahren von Betriebsbremsfunktionen von mobilen Arbeitsmaschinen, insbesondere Agrarmaschinen und Baumaschinen, folgende Schritte umfassend:
- Erfassen von mindestens einem externen Signal über mindestens einen Sensor (06) und Weiterleiten (S1) an eine Steuereinheit (02);
- Verarbeitung des mindestens einen externen Signals und Ermitteln (S2) eines Sollbremsdrucks auf Basis des mindestens einen externen Signals;
- Berechnung (S3) eines notwendigen elektrischen Ventilstroms auf Basis des ermittelten Sollbremsdrucks;
- Weiterleitung (S4) des berechneten Ventilstroms an ein Steuerventil (70) eines Bremsbetätigungspedals (10); und
- Einstellen (S5) eines Bremsdrucks in einem hydraulischen Bremskreislauf (03, 04) über das Bremsbetätigungspedal (10), sodass eine Betriebsbremsfunktion eingestellt wird,
wobei das Berechnen (S3) des Ventilstroms durch eine Vorauswahl (S6) von Bremsfunktionsmodi über eine Mensch-Maschinen-Schnittstelle (05) erfolgt, wobei das Einstellen von Betriebsbremsfunktionen nach der Vorauswahl eines Bremsfunktionsmodus automatisch erfolgt, **dadurch gekennzeichnet, dass** das externe Signal aus einer kontinuierlichen Umfeld-Überwachung der mobilen Arbeitsmaschine ermittelt wird.

2. Einstellverfahren von Betriebsbremsfunktionen nach Anspruch 1, **dadurch gekennzeichnet, dass** das Weiterleiten des mindestens einen externen Signals an die Steuereinheit (02) über eine drahtgebundene oder drahtlose Verbindung erfolgt.

3. Einstellverfahren von Betriebsbremsfunktionen nach Anspruch 1 oder 2, **dadurch gekennzeichnet, dass** die Berechnung (S3) des notwendigen Ventilstroms mit Hilfe von Kennfeldern und/oder mathematischen Formeln und/oder Algorithmen und/oder einem vorher festgelegten Schwellwert erfolgt.

4. Einstellverfahren von Betriebsbremsfunktionen nach einem der Ansprüche 1 bis 3, **dadurch gekennzeichnet, dass** zeitgleich mehrere Bremsfunktionsmodi ausgewählt sein können oder sind.

5. Einstellverfahren von Betriebsbremsfunktionen nach einem der Ansprüche 1 bis 4, **dadurch gekennzeichnet, dass** an den Bremsfunktionsmodi Adaptionen vorgenommen werden.

6. Einstellverfahren von Betriebsbremsfunktionen nach einem der Ansprüche 1 bis 5, **dadurch gekennzeichnet, dass** die Bremsfunktionsmodi als Hill-Hold-Modus und/oder als Down-Hill-Braking-Modus ausgebildet sind.

7. Bremsanordnung für mobile Arbeitsmaschinen umfassend:
ein hydraulisches Bremsbetätigungspedal (10) zum Einstellen eines Bremsdrucks;
ein Steuerventil (70), welches an einem hydraulischen Bremsbetätigungspedal (10) angeordnet ist;
einen hydraulischen Kreislauf, welcher sich in einen ersten hydraulischen Kreislauf (03) und in einen zweiten hydraulischen Kreislauf (04) gliedert, wobei der erste hydraulische Kreislauf (03) mit einem ersten Betätigungsabschnitt des Bremsbetätigungspedals (10) und der zweite hydraulische Kreislauf (04) mit einem zweiten Betätigungsabschnitt des Bremsbetätigungspedals (10) angeordnet und in Wirkverbindung ist;
eine elektronische Steuereinheit (02), welche mit dem Steuerventil (70) verbunden ist um einen berechneten elektrischen Ventilstrom über das Steuerventil (70) an das hydraulische Bremsbetätigungspedal (10) zu übertragen;
eine Mensch-Maschinen-Schnittstelle (05), welche mit der elektronischen Steuereinheit (02) verbunden ist; und
mindestens einen Sensor (06) zum Erfassen von mindestens einem externen Signal der mobilen Arbeitsmaschine,
**dadurch gekennzeichnet, dass** die Bremsanordnung dazu ausgelegt ist das elektrohydraulische Bremsverfahren gemäß den Ansprüchen 1 bis 6 auszuführen.

8. Bremsanordnung nach Anspruch 7, **dadurch gekennzeichnet, dass** die Mensch-Maschinen-Schnittstelle (05) als ein externes Bedienelement ausgebildet ist.

9. Bremsanordnung nach Anspruch 7 oder 8, **dadurch gekennzeichnet, dass** die mobile Arbeitsmaschine einen elektrifizierten oder elektrischen Antrieb aufweist.

10. Bremsanordnung nach einem der Ansprüche 7 bis 9, **dadurch gekennzeichnet, dass** das hydraulische Bremsbetätigungspedal (10) einen ersten und einen zweiten Schieber (41, 51), eine erste und eine zweite Unterbaugruppe (20; 60) umfasst, die so konfiguriert sind, dass sie in einer vormontierten Weise aneinander montiert werden können.

11. Bremsanordnung nach Anspruch 10, **dadurch gekennzeichnet, dass** die erste Unterbaugruppe (20) den ersten Schieber (41) und einen ersten Betätigungskolben (42) umfasst, die jeweils entlang einer ersten Achse (40) beweglich sind, wobei mindestens eine erste Feder (44) zwischen dem ersten Schieber (41) und dem ersten Betätigungskolben (42) entlang der ersten Achse (40) angeordnet ist, wobei die erste Unterbaugruppe (20) den zweiten Schieber (51) und einen zweiten Betätigungskolben (52) umfasst, die jeweils entlang einer zweiten Achse (50) beweglich sind, wobei mindestens eine zweite Feder (54) zwischen dem zweiten Schieber (51) und dem zweiten Betätigungskolben (52) entlang der zweiten Achse (50) angeordnet ist, wobei die erste und die zweite Achse (40; 50) parallel zueinander sind,
und / oder wobei die zweite Unterbaugruppe (60) einen dritten und einen vierten Betätigungskolben (62; 63) umfasst, wobei der dritte Betätigungskolben (62) entlang der ersten Achse (40) bewegbar ist, wobei er eine dritte Kontaktfläche aufweist, die in der Lage ist, eine erste Kontaktfläche (43) des ersten Betätigungskolbens (42) zu kontaktieren, wobei der vierte Betätigungskolben (63) entlang der zweiten Achse (50) bewegbar ist, wobei er eine vierte Kontaktfläche aufweist, die an einer zweiten Kontaktfläche (53) des zweiten Betätigungskolbens (52) kontaktieren kann.

## Claims

1. Adjustment method for service brake functions of mobile working machines, in particular agricultural machines and construction machines, comprising the following steps:
- sensing at least one external signal via at least one sensor (06) and forwarding (S1) it to a control unit (02);
- processing the at least one external signal and determining (S2) a setpoint brake pressure on the basis of at least one external signal;
- calculating (S3) a necessary electrical valve current based on the determined setpoint brake pressure;
- forwarding (S4) the calculated valve current to a control valve (70) of a brake actuating pedal (10); and
- adjusting (S5) a brake pressure in a hydraulic brake circuit (03, 04) via the brake actuating pedal (10), with the result that a service brake function is set,
wherein the calculation (S3) of the valve current is carried out by a preselection (S6) of brake function modes via a man-machine interface (05), wherein the adjusting of service brake functions is carried out automatically after the preselection of a brake function mode, **characterized in that** the external signal is determined from continuous environment monitoring of the mobile working machine.

2. Adjustment method of service brake functions according to Claim 1, **characterized in that** the forwarding of the at least one external signal to the control unit (02) is carried out via a wired or wireless connection.

3. Adjustment method of service brake functions according to Claim 1 or 2, **characterized in that** the calculation (S3) of the necessary valve current is carried out with the aid of characteristic diagrams and/or mathematical formulae and/or algorithms and/or a predetermined threshold value.

4. Adjustment method of service brake functions according to one of Claims 1 to 3, **characterized in that** several brake function modes can be or are selected at the same time.

5. Adjustment method of service brake functions according to one of Claims 1 to 4, **characterized in that** adaptations are made to the brake function modes.

6. Adjustment method of service brake functions according to one of Claims 1 to 5, **characterized in that** the brake function modes are configured as a hill-hold mode and/or as a downhill-braking mode.

7. Brake arrangement for mobile working machines comprising:
a hydraulic brake actuating pedal (10) for adjusting a brake pressure;
a control valve (70) which is located on a hydraulic brake actuating pedal (10);
a hydraulic circuit which is divided into a first hydraulic circuit (03) and a second hydraulic circuit (04), wherein the first hydraulic circuit (03) is arranged and operatively connected by way of a first actuating section of the brake actuating pedal (10), and the second hydraulic circuit (04) is arranged and operatively connected by way of a second actuating section of the brake actuating pedal (10);
an electronic control unit (02) which is connected to the control valve (70) to transmit a calculated electrical valve current via the control valve (70) to the hydraulic brake actuating pedal (10);
a man-machine interface (05) which is connected to the electronic control unit (02); and
at least one sensor (06) for detecting at least one external signal of the mobile working machine,
**characterized in that** the brake arrangement is designed to carry out the electrohydraulic brake method according to Claims 1 to 6.

8. Brake arrangement according to Claim 7, **characterized in that** the man-machine interface (05) is designed as an external operating element.

9. Brake arrangement according to Claim 7 or 8, **characterized in that** the mobile working machine has an electrified or electric drive.

10. Brake arrangement according to one of Claims 7 to 9, **characterized in that** the hydraulic brake actuating pedal (10) comprises a first and a second slide (41, 51), a first and a second subassembly (20; 60), which are configured in such a way that they can be mounted on one another in a pre-assembled manner.

11. Brake arrangement according to Claim 10, **characterized in that** the first subassembly (20) comprises the first slide (41) and a first actuating piston (42), each of which is movable along a first axis (40), wherein at least one first spring (44) is arranged between the first spool (41) and the first actuating piston (42) along the first axis (40), wherein the first subassembly (20) comprises the second slide (51) and a second actuating piston (52), each of which is movable along a second axis (50), wherein at least one second spring (54) is arranged between the second slide (51) and the second actuating piston (52) along the second axis (50), wherein the first and the second axis (40; 50) are parallel to each other,
and / or
wherein the second subassembly (60) comprises a third and a fourth actuating piston (62; 63), wherein the third actuating piston (62) is movable along the first axis (40), wherein it has a third contact surface which can make contact with a first contact surface (43) of the first actuating piston (42), wherein the fourth actuating piston (63) is movable along the second axis (50), wherein it has a fourth contact surface which can make contact with a second contact surface (53) of the second actuating piston (52).

## Revendications

1. Procédé de réglage de fonctions de freinage de service de machines de travail mobiles, notamment de machines agricoles et de machine de chantier, comprenant les étapes suivantes :
- la détection d'au moins un signal externe par l'intermédiaire d'au moins un capteur (06) et la transmission (S1) à une unité de commande (02) ;
- le traitement de l'au moins un signal externe et la détermination (S2) d'une pression de freinage de consigne sur la base de l'au moins un signal externe ;
- le calcul (S3) d'un courant de soupape électrique nécessaire sur la base de la pression de freinage de consigne déterminée ;
- la transmission (S4) du courant de soupape calculé à une soupape de commande (70) d'une pédale d'actionnement de frein (10) ; et
- le réglage (S5) d'une pression de freinage dans un circuit de freinage hydraulique (03, 04) par l'intermédiaire de la pédale d'actionnement de frein (10) de telle sorte qu'une fonction de freinage de service est réglée,
le calcul (S3) du courant de soupape étant effectué par une présélection (S6) de modes de fonction de freinage par l'intermédiaire d'une interface homme-machine (05), le réglage de fonctions de freinage de service étant effectué automatiquement après la présélection d'un mode de fonction de freinage, **caractérisé en ce que** le signal externe est déterminé à partir d'une surveillance continue de l'environnement de la machine de travail mobile.

2. Procédé de réglage de fonctions de freinage de service selon la revendication 1, **caractérisé en ce que** la transmission de l'au moins un signal externe à l'unité de commande (02) s'effectue par l'intermédiaire d'une liaison filaire ou sans fil.

3. Procédé de réglage de fonctions de freinage de service selon la revendication 1 ou 2, **caractérisé en ce que** le calcul (S3) du courant de soupape nécessaire est effectué à l'aide de diagrammes caractéristiques et/ou de formules mathématiques et/ou d'algorithmes et/ou d'une valeur de seuil prédéterminée.

4. Procédé de réglage des fonctions de freinage de service selon l'une quelconque des revendications 1 à 3, **caractérisé en ce que** plusieurs modes de fonction de freinage peuvent être ou sont sélectionnés simultanément.

5. Procédé de réglage de fonctions de freinage de service selon l'une quelconque des revendications 1 à 4, **caractérisé en ce que** des adaptations sont effectuées sur les modes de fonction de freinage.

6. Procédé de réglage de fonctions de freinage de service selon l'une quelconque des revendications 1 à 5, **caractérisé en ce que** les modes de fonction de freinage sont réalisés en tant que mode Hill Hold et/ou en tant que mode Down Hill Braking.

7. Agencement de freinage pour machines de travail mobiles, comprenant :
une pédale d'actionnement de frein hydraulique (10) pour régler une pression de freinage ;
une soupape de commande (70) agencée sur une pédale d'actionnement de frein hydraulique (10) ;
un circuit hydraulique qui se divise en un premier circuit hydraulique (03) et un deuxième circuit hydraulique (04), le premier circuit hydraulique (03) étant agencé avec une première section d'actionnement de la pédale d'actionnement de frein (10) et le deuxième circuit hydraulique (04) étant agencé avec une deuxième section d'actionnement de la pédale d'actionnement de frein (10) et en communication fonctionnelle avec celle-ci ;
une unité de commande électronique (02) reliée à la soupape de commande (70) pour transmettre un courant de soupape électrique calculé à la pédale d'actionnement de frein hydraulique (10) par l'intermédiaire de la soupape de commande (70) ;
une interface homme-machine (05) reliée à l'unité de commande électronique (02) ; et
au moins un capteur (06) pour détecter au moins un signal externe de la machine de travail mobile,
**caractérisé en ce que** l'agencement de freinage est conçu pour exécuter le procédé de freinage électro-hydraulique selon les revendications 1 à 6.

8. Agencement de freinage selon la revendication 7, **caractérisé en ce que** l'interface homme-machine (05) est réalisée sous la forme d'un élément de commande externe.

9. Agencement de freinage selon la revendication 7 ou 8, **caractérisé en ce que** la machine de travail mobile présente un entraînement électrifié ou électrique.

10. Agencement de freinage selon l'une quelconque des revendications 7 à 9, **caractérisé en ce que** la pédale d'actionnement de frein hydraulique (10) comprend un premier et un deuxième coulisseaux (41, 51), un premier et un deuxième sous-ensembles (20 ; 60) configurés pour être assemblés l'un à l'autre d'une manière préassemblée.

11. Agencement de freinage selon la revendication 10, **caractérisé en ce que** le premier sous-ensemble (20) comprend le premier coulisseau (41) et un premier piston d'actionnement (42), chacun étant mobile le long d'un premier axe (40), au moins un premier ressort (44) étant agencé entre le premier coulisseau (41) et le premier piston d'actionnement (42) le long du premier axe (40), le premier sous-ensemble (20) comprenant le deuxième coulisseau (51) et un deuxième piston d'actionnement (52), chacun étant mobile le long d'un deuxième axe (50), au moins un deuxième ressort (54) étant agencé entre le deuxième coulisseau (51) et le deuxième piston d'actionnement (52) le long du deuxième axe (50), les premier et deuxième axes (40 ; 50) étant parallèles entre eux,
et/ou
le deuxième sous-ensemble (60) comprenant un troisième et un quatrième pistons d'actionnement (62 ; 63), le troisième piston d'actionnement (62) étant mobile le long du premier axe (40), présentant une troisième surface de contact capable d'entrer en contact avec une première surface de contact (43) du premier piston d'actionnement (42), le quatrième piston d'actionnement (63) étant mobile le long du deuxième axe (50), présentant une quatrième surface de contact capable d'entrer en contact avec une deuxième surface de contact (53) du deuxième piston d'actionnement (52).
